**Europäisches Patentamt**

(19) **European Patent Office**

**Office européen des brevets**

(11) Publication number: 0 148 154
A2

# (12) EUROPEAN PATENT APPLICATION

(21) Application number: 85100042.2

(22) Date of filing: 02.01.85

(51) Int. Cl.⁴: **H 02 G 1/12**
**H 01 R 43/28**

(30) Priority: 29.12.83 IT 8364383
29.12.83 IT 8364483
29.12.83 IT 6096083 U

(43) Date of publication of application:
10.07.85 Bulletin 85/28

(84) Designated Contracting States:
AT BE CH DE FR GB IT LI LU NL SE

(71) Applicant: Cucchetti, Gianluigi
Via Volta 9
I-21020 Ternate (Varese)(IT)

(72) Inventor: Cucchetti, Gianluigi
Via Volta 9
I-21020 Ternate (Varese)(IT)

(74) Representative: Sassi, Romano
UFFICIO BREVETTI VARESINO Viale Belforte 89
I-21100 Varese(IT)

(54) Process and means for stripping and twisting the end of electric leads.

(57) The process comprise supplying of a coated lead (0723) to be prepared or, alternately, of operating means (50, 53, 54), along a single path including, as in a single step the three operations, providing a track, both for a hand working and for an authomatic working, which is thus allowed. The working taking place substantially along at least two planes at right angles (I and III): upon a first movement (I') normal to the axis of the lead along a first plane (I) wherein the means (60, 60') operate providing the gathering which is coplanar but determining at least the direction of a second plane (II) at right angles with the first plane (I); a movement at right angles of the axis of the lead (0723) follows along a plane also normal to the first plane (I) and to itself (II) and determining a third plane (III), at right angles with the first and second one (I and II), wherein the third plane (III) and the second (II) plane are disposed as the lead (0723) and gathering (777) of the screening wires (7). The system comprises at least three devices (50, 53, 54), operating at least four steps: one of stripping, one of parting and two of twisting. The process tools comprise a pair (50) of parting propellers (6, 6'), an helicoidal spiral or screw propeller (8), at least partially conical, and particularly, is provided, at inner centripetal surfaces, of at least a blade tool (92'), whereby stripping and/or twisting a stranded lead end (037, 047, 057), even if of the screened (0723) or coaxial fashion (0723') are provided.

./...

FIG.5

## PROCESS AND MEANS FOR STRIPPING AND TWISTING THE END OF ELECTRIC LEADS

0148154

The present invention is directed to connection preparation of lead ends, and more particularly, to a system of tools to provide, authomatically or at least semiauthomatically, preparation of a stranded electrical lead, particularly of outer ones, resulting from a first coating stripping screened and coaxial lead ends and in general those leads which in view of electrical connection are to be submitted to one or more of the following workings: 1) stripping or tearing off of at least a piece of coating and/or 2) twisting or compacting of stranded wire ends and/or 3) putting in order the wires comprising the stranded lead. It is also an object of the present invention a process provided by such system, as well as the inherent devices substantially including: a spiral helicoidal propeller, at least partially conical, particularly provided with at least a radial, centripetal blade tool, for stripping and/or twisting stranded lead ends, particularly those of screened and coaxial leads and a device, with at least two propellers, substantially tangential, with blades in the form of bristles, interacting, particularly for parting of outer wires, emerging from lead end stripping, particularly of screened and coaxial ones, in the form of a strand projecting at right angles with

the lead.                                           0148154

For a better understanding of the invention the following term will be used with the following meaning:

Wire = As wire is meant a single wire, which alone or in combination with other parallel or twisted wires comprises the lead end;

lead = means a system of one or more wires of electric leading material operatively connected or connectable;

Unipolar cable= means a system comprising a single wire lead and its insulation coating;

N-polar cable = means a system comprising N leads and N + 1 insulation coatings;

N-polar coaxial or screened cable= means A system comprising N+1 leads and N+1 insulating coatings, wherein the wires providing the stranded lead have a parallel or screw setting according a cylinder immediatly underlaying the outer coating.

Unipolar screened and coaxial cables, in view of their connection, by soldering, fastoning or the like, are at first stripped at their ends, by removal of outer insulation coating, and this gather a tuft of wires, substantially free at one end, which have a trend to stick or to set untidly, about the still coated central lead. Such a central coated lead, is to be, in turn, at least stripped and quite often twisted. Of course, the outer wires of the lead, which characterize the screened or coaxial lead, are to be connected, distinctly from the wires comprising the proper lead, and between them the insulation provided by the coating is not to be spoiled. This parting or separation of two leads, is, at present, made by hand, with a heavy consume of time and of energy, particularly psicophisical, as well as representing a monotonous and degrading job. In fact, known stripping and/or twisting devices for screened or coaxial cables are scarcely adapted to prepare their ends to soldering connection. In fact, in the latter, difficulties are encountered to evidentiate the screening wires of the lead, in the form of a twisted strand, projecting substantially perpendicularly to the central lead, whereby to separate the same, to promote the coating removal therefrom. The authomatization of these functions was particularly complicated by thinness and numerosity of wires, as well as by their sticking to the coating of the central lead and due to lackening of suitable tools, each adapted to execute only a single working step. The same have been executed individually in serial but only for conventional cables and not for screened or coaxial cables.
Among the known devices to prepare wires, leads, cables, for electrical connection, i.e. stripping and twisting the lead ends, some are known in the form of so said wire strippers and in the form of rotating devices some of which providing even the twisting step of the lead wires. In the latter case, the rotating engineering device in the form of a cumbersome mandrel with radial blades driven by a remote control and comprising a multitude, of members, such as, jaw, blades, springs, followers, pedals, rods, slides and the likes and their cost could be justified only in case of mass production, also in consideration of necessary adjusting due in each working change. In these devices, lead stripping took place substantially without chip removal, by shearing and removing the short length of coating, from the lead end, between the shearing line and the terminal. In order to comply with the operation steps two arrangements had to be taken: the leads were, one by one, to be supplied in a strictly axial way and, at the rigth time, a drive, by a command and/or by a remote control, i.e. by a pedal, followed. In absence of such readiness and/or tempestivity, the results were poor and many waste risulted. Moreover, a serious limitation of known devices was due to their overall dimensions which were detrimental in case of multipolar cables including short and/or close which could not be properly spaced apart so as to supply each of them for working. The same reason was detrimental in the preparation of excedingly thin and/or pliable leads.

The invention as claimed is intended to remedy these drawbacks: firstly by a logistic arrangement of tools and movements to be made by the user or by an hypothetical servo control, whereby all the preparation steps to connect a cable to be worked, particularly in the case that the cable is screened or coaxial are provided with a single routine. When working is made by hand seizing cable end the same is guided by one or more grooves providing an ideal pathway; secondly such tools, are substantially comprised in a single unit which, once set into rotation, not only is able to provide, authomatically, both stripping and twisting but it also allows a radial input, of a cable end substantially parallel to axis of rotation of the tool conceived by the inventor. In fact, it is in the form of a conical spiral, i.e. provided as a screw, drawn on a cone, substantially thread-like, whereby it spontaneously provides twisting of wires and of a stranded lead.

By providing the spiral with a blade which may be comprised by a particular cross-section of the screw turns by shaping also the same, stripping and twisting may be obtained from the same tool. The shape of the spiral, as well as the form and disposition of its blade may be specialized to a particular purpose, e.g. with rather thin and/or flexible leads. However the ingenious perception of the inventor not only provides the tools but even operative means whereby the problem of providing a propeller in a simple way is solved. In fact,

0143154

according to the present invention the propeller is substantially comprised by a section, shaped as a screw spiral, at least partially conical, wherein one end thereof has a centripetal and axial trend, whereby to provide a drivable shaft. Whereas the opposed end has a centrifugal or at least tangential trend, to provide an ample and easy access for the input of the cable to be prepared. In fact, the cable end is only to be approached, to the propeller and it is at once captured centripetally and therein at first stripped and thereafter twisted. It is also surprising how with the same effectiveness as it inputs the single wires, even if untidly found, it gently releases the seize, whereby to get them available and in good order. Upon stripping a gathering is provided by a pair of propellers, substantially comprising brush means, which rotate in opposite directions, intersecting each other, whereby to involve the whole outer surface of core lead coating, whereby to direct the thin wires in a direction perpendicular to the propeller and core lead. However, the most important result achieved by the inventor is a set of tools which are extremely adaptable, whereby they may be combined as an authomatic device in highly sofisticated systems.

In order to explain in a better manner the features of the present invention, reference is made to the accompanying drawings which show possible embodiments thereof in schematic manner and merely by way of explaination.

Figure 1 is a perspective view of a starting cable i.e., before working.

Figure 2 is a perspective schematic view of a system comprising two tools, one of which is devoted to part the leads and the second one pertaining to the art of cable connection preparation to soldering, fastoning or the like, particularly of screened or coaxial cables.

Figure 3 shows a cable at the end of first working step within the first tool shown in Figure 2.

Figure 4 shows a cable subjected to the first and the second working steps through the first and second stations of Figure 2. Figures from 1 through 4, may be functionally considered as a single Figure.

Figure 5 is substantially a repetition of the figures from 1 through 4, wherein from the unit of Figure 2, the free wires had been parted and gathered, with a possible embodiment of the stripping and gathering devices.

Figure 6 is a particular perspective view of the sole spiral in a simpler embodiment thereof: i.e., made of steel rod which is round in cross-section thus adapted to be seized by a driving mandrel.

Figure 7 is a particular perspective view of another embodiment of the sole spiral which, from the constructive point of view, is obtained by machine tools and from the operation point of view it provides the twofold function of stripping and twisting the lead ends.

Figure 8 shows the spiral of Figure 6, but during twisting of a lead; a previous and following condition thereof being shown thereabove and thereunder.

Figure 9 shows the spiral of Figure 7, but during cable stripping; four cables are shown, one of them is shown in oot and dash lines, in the final condition of the cable with inherent chips.

Figure 10 is a perspective view, of a process step, whereby shaping by abrasion is provided by a disc cilindrical grinding wheel with the axis substantially parallel to the screw to be provided, wherein the grinding wheel engages the screw in a field of positions suitable to provide a very sharp, a sharp, or blunt blade.

Figure 11, in fact, shows a very sharp blade edge;

Figure 12, in fact, shows a sharp blade edge,;

Figure 13, in fact, shows, a blunt blade edge;

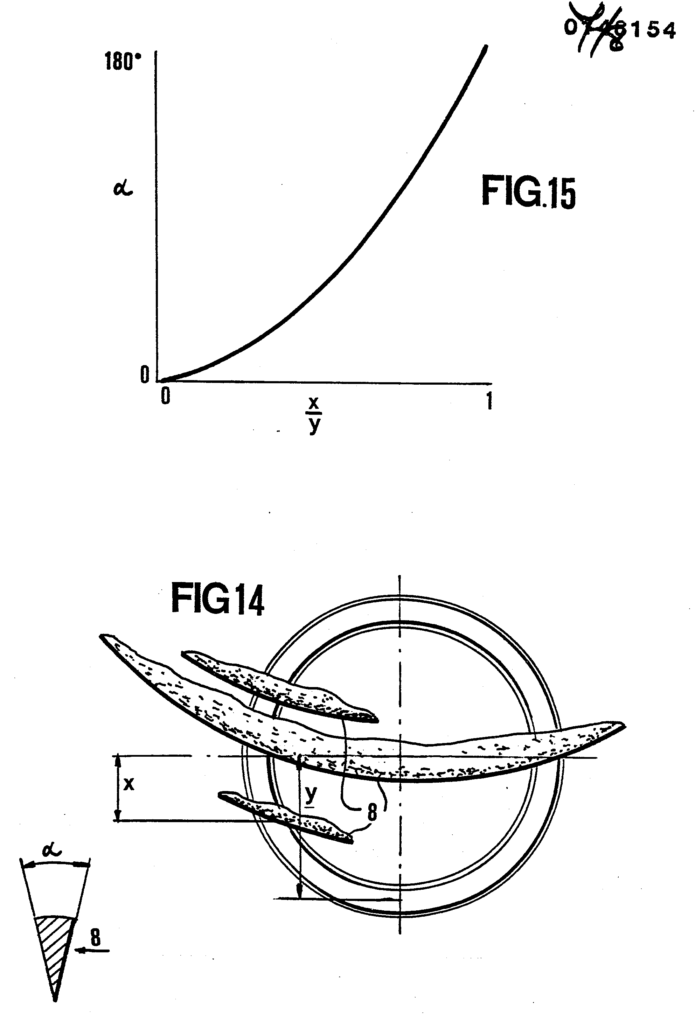

Figure 14 is a demonstrative sketch of possible working contacts providing the conditions shown in Figure 10, as well as in Figures 11, 12 and 13;

Figure 15 is a demonstrative graph showing the alfa angle trend, providing the inner cutting edge, in function of the ratio x/y, wherein x is the distance of grinding wheel contacting screw, from the perpendicular connecting the axes of grinding

0148154

wheel and of screw, passing through the axis of the same screw, while y is the pitch radius of the spiral.

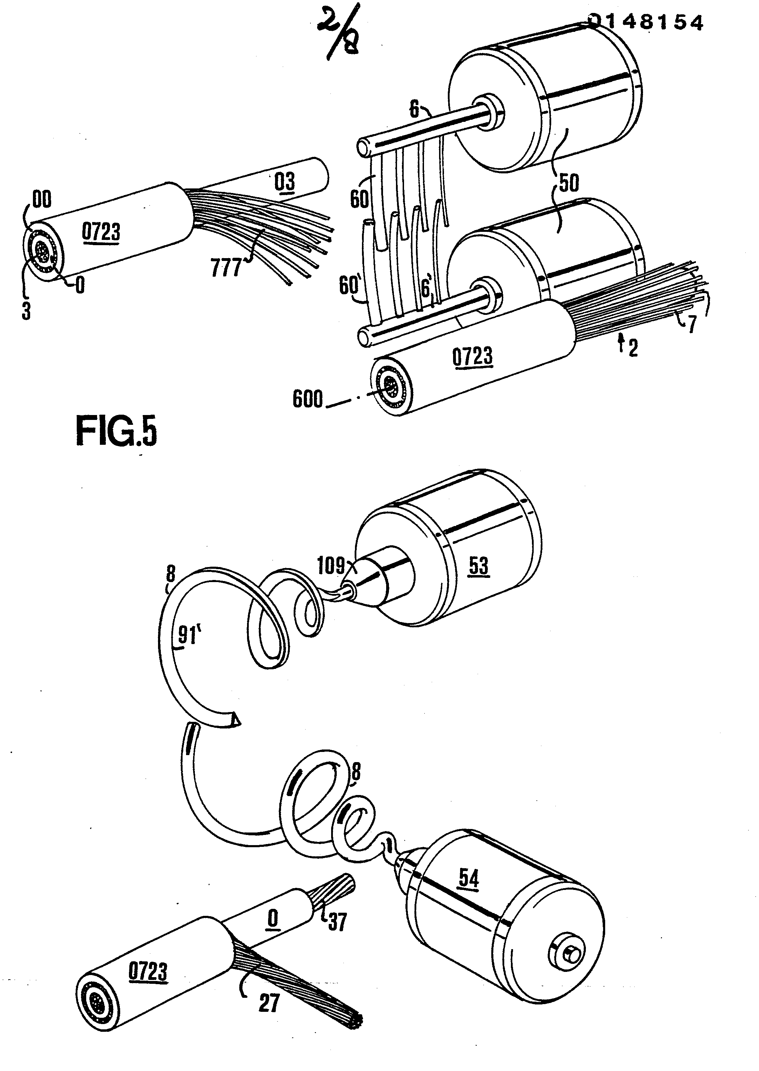

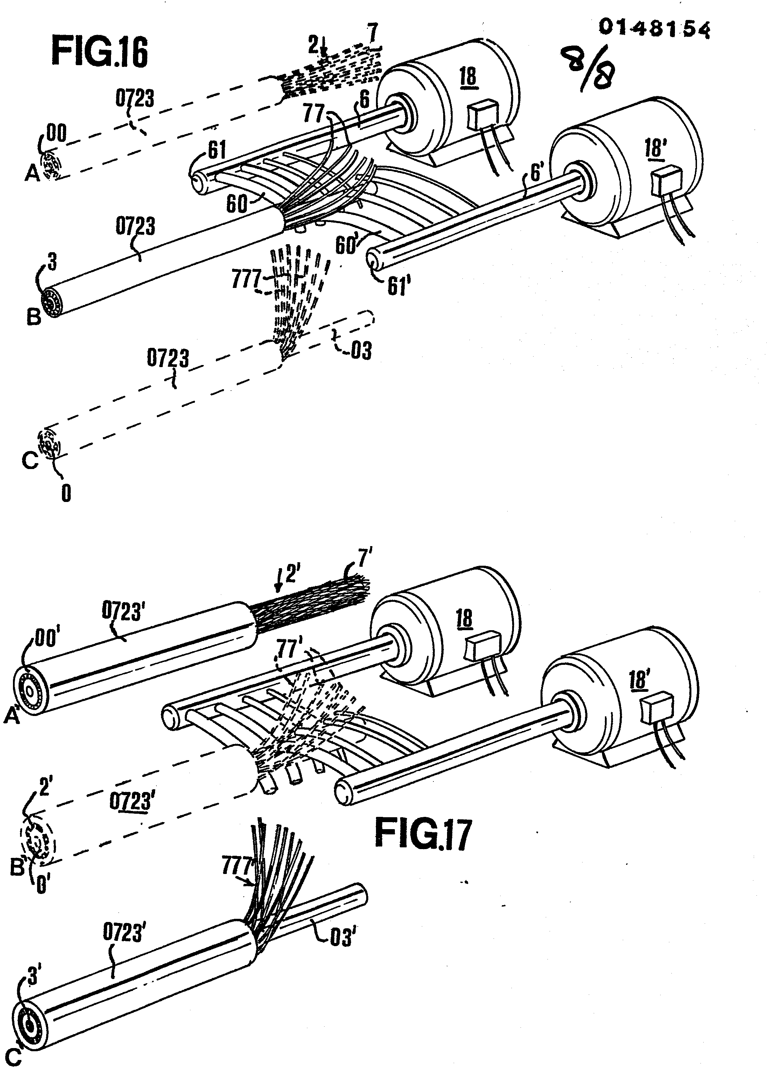

Figure 16 is a particular schematic perspective view, of Figure 5 and particularly of a device, at the time in which, the bristles of its propellers, are engaged to compact the outer wires of a screened lead, providing with the same wires, a cluster oriented in a direction, substantially perpendicular, to the axis of screened cable. In the Figure itself, in dot and dash lines above and under the cable being worked, are shown, in perspective view, the cable; before working, with the screening wires still gathered, in a bundle, all around the screened cable and, after working, wherein is shown, by continuous lines, centrally, at the bottom, wires gathered as a sheaf, in a direction substantially perpendicular to the cable axis.

Figure 17 is substantially a repetition of Figure 16, with the exception that, in figure 16, the coaxial cable is shown in dot and dash lines subjected to the central part of the device, while, the upper coaxial cable and the bottom coaxial cable, as in the embodiments shown in figure 16, are respectively gathered around and project, at right angles with the bundle.

Contestually with what stated in the foreward, wires are designated with numeral 7, leads are designated with reference numerals 2, 3, 4, 5, wherein reference 2 indicates the screening lead. Numerals 0 refer to lead coatings while the outer coating of the cable (in the drawings only unipolar screened cables are shown) is designated with numeral 00. Of course for distinguishing two members designated with the same numeral an apex was used. It will be appreciated that like numerals refer to like parts throughout.

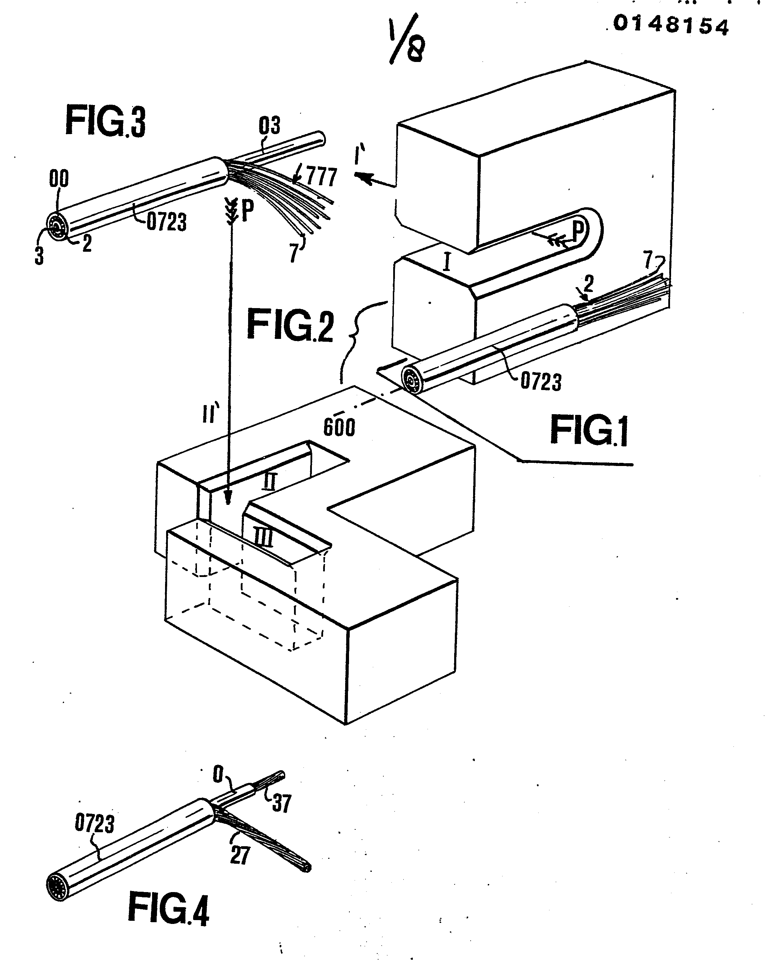

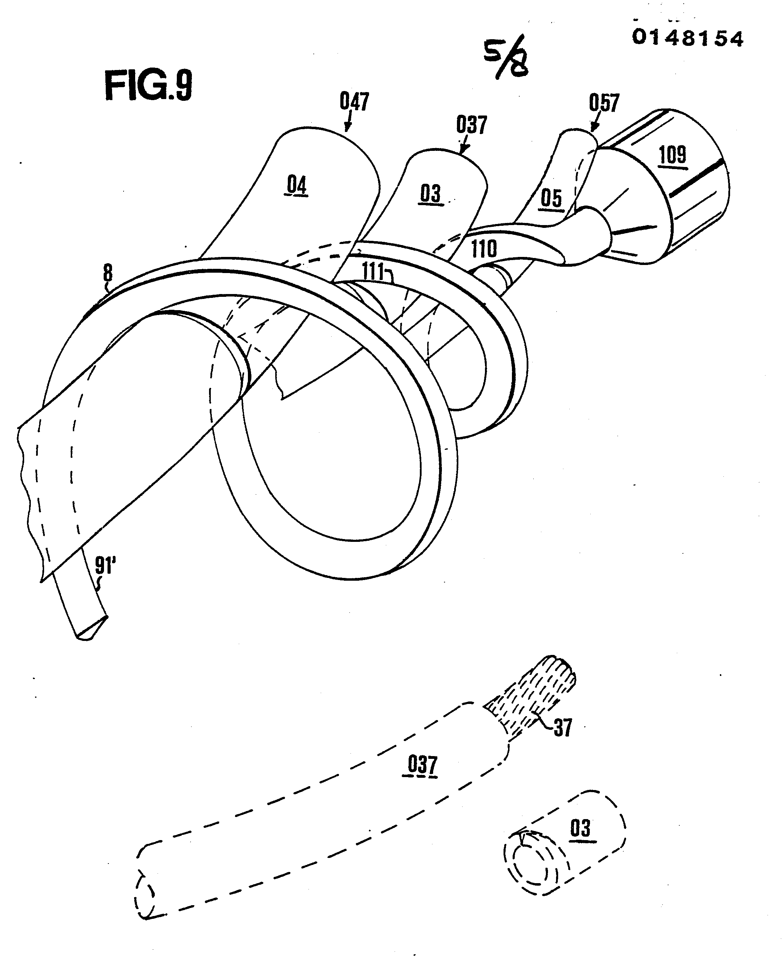

With reference to the figures from 1 through 5 of the drawings, a connection of an electrical, stranded, screened or coaxial cable 0723, provided with an outer coating 00, enclosing a crown of wires 7, Which, enclosing, in turn, a coating 03 of the core lead 3, including a bundle of thin wires, not shown, substantially parallel, wherein the cable to be worked 0723, as shown in figure 1, is without coating 00 and comprises the screening wires 7 adhering closely to the coating 03 of the inner lead 3, which are to be gathered, substantially at right angles with central lead 3 itself, and thereafter twisted (figure 5), while the core lead 3, in turn, is to be stripped and twisted, as it will be described with reference to Figure 9; the cable 0723 to be prepared, or alternately, the operative means 50, 53, 54, are conducted along a single pathway including, as in a single step, three operations, providing a track both for hand control, and for authomatic control,

whereby working takes place substantially along at least two planes I and III, at right angles and preferably along three planes I, II, III and that, upon a first movement I´, perpendicular to axis 600 of coaxial cable 0723, in a plane I along which propellers 6, 6´ operates providing the parting step also coplanar, but determining at least a direction along a plane II, at right angles with plane I, a movement II´, at right angles with axis 600 of coaxial cable 0723, follows along planes also perpendicular to the first one and to itself and determining a plane III, at right angles with said first and the second plane, wherein plane III and plane II are arranged each other as lead 3 and gathering 777 of screening wires 7. Of course planes I, II, III at right angles, through which working takes place, may be two: I and II. In fact, plane III may be surrogated, by turning of cable 0723, by 90 degrees, around its axis 600. The system comprises at least three devices 50, 53, 54, providing along at least two planes I and III, at right angles each other, at least four steps: two of twisting (devices 53 and 54), one of gathering and one of stripping.

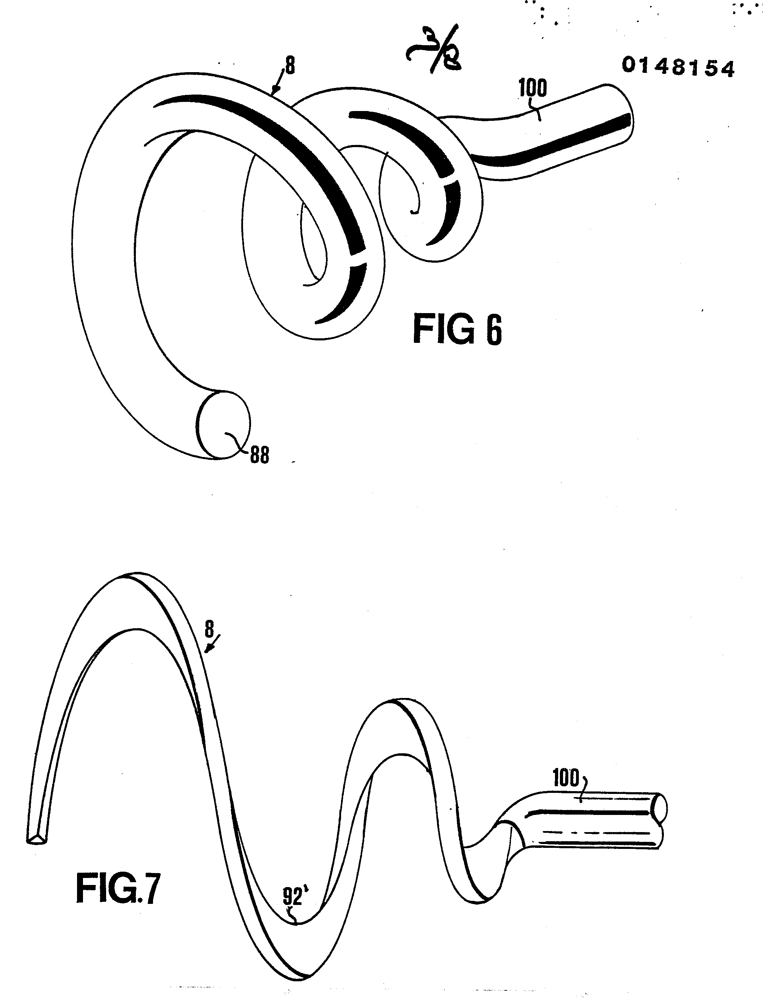

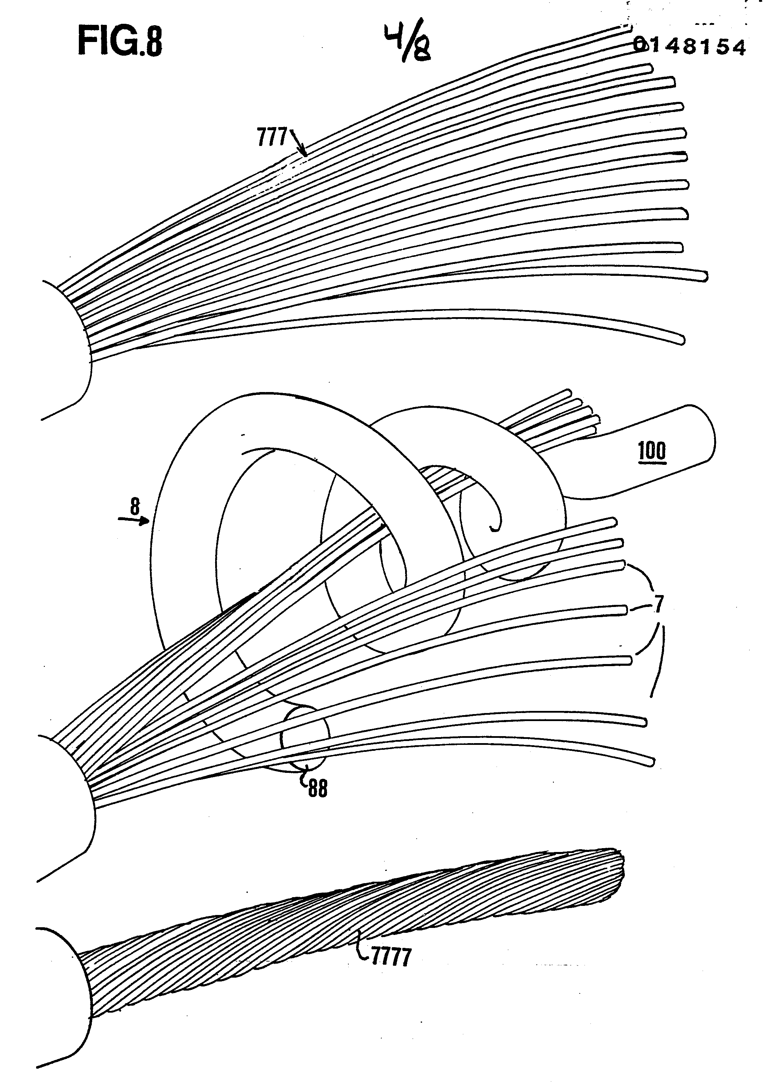

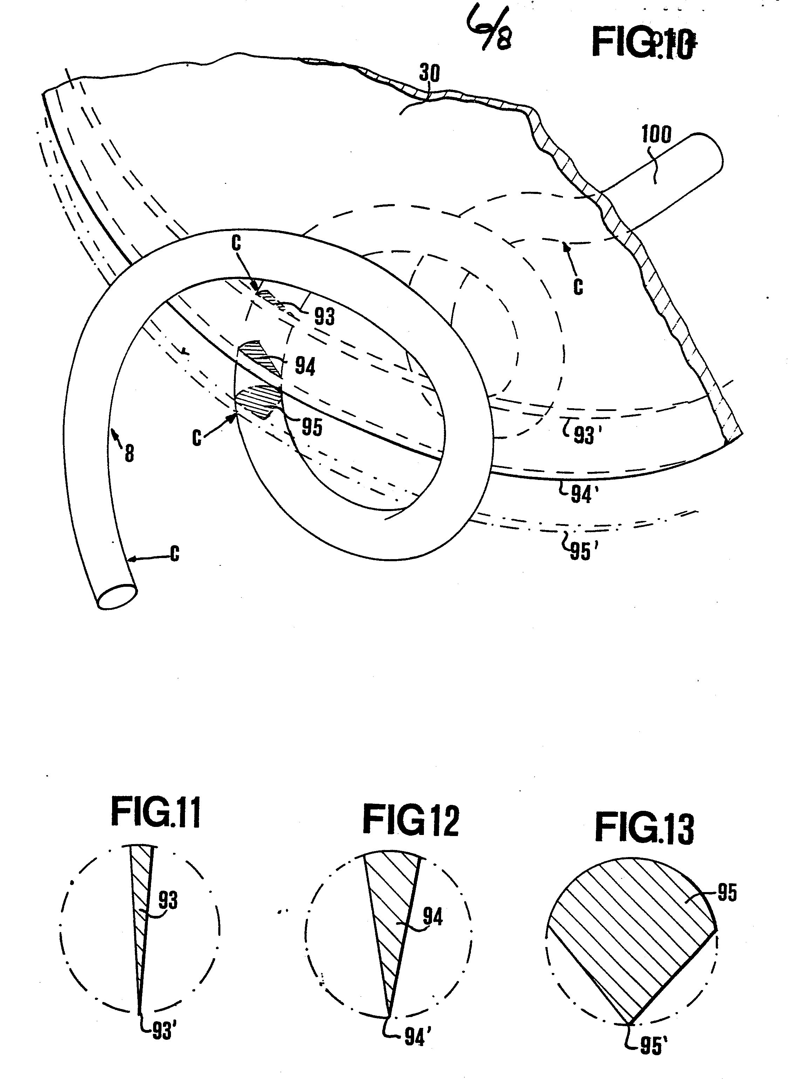

Hereinbefore the process description. Reference is now made to the process devices and particularly to figures 6 and 7 and from 9 through 15 of the drawings regarding the stripping device. According to the present invention, a propeller 8 comprises

an helicoidal spiral, at least partially conical, made of steel section 88 (figures 6 and 8) round in cross-section or having at least a vertex 91´, 92´, 93´, 94´, 95´, comprising a sharp edge or blade, (figures 7, 9, 10, 11, 12 and 13), providing stripping (figura 9) and/or twisting (figure 8) of cables 037, 047, 057, characterized by an outer coating: 03, 04, 05, which may be screened or coaxial (not shown). Provision of the screw, starting from a steel section, may occur, in a known manner, by a machine for making springs and the like. Thus the description thereof may be omitted. Provision of a blade 91´, 92´, 93´, 94´, 95´, involves the use of a steel section, having substantially that shape. On the other hand difficulties may arise when an irregular cross-section, particularly when the two poligonal cross-sections do not correspond, at least from the point of view of coupling of screw driving member or axial stem 100, e.g. to a mandrel.

As regards as the shaping and grinding process thereof, it may be effected by a grinding wheel 30, contacting the inner wall of screw 8, to engage the same, in a range substantially included between arrows C, in indefinite contacting positions, three of which are shown: 93, 94, 95.

Grinding wheel 30 is tooled so as to work with the axis substantially parallel to the axis of screw 8. Obviously, the grinding wheel 30 and/or screw 8 are to be moved through substantially parallel pathways. In this shaping or grinding process, angle alpha is important. According to the present invention, it may be adjusted by adjusting the x parameter in function of y parameter. Whereas the constructive parameters of the propeller are correlated to the lead to be prepared by the following demonstrative relation:

$1 < (V \, Pr + Pa) - S$ wherein:

$1 = d$

$1 = D - \left(\dfrac{D-d}{2}\right)$ when the centripetal surface of the screw is a blade and again wherein:

D= outer diameter of lead inclusive of coating;
d= diameter of metallic section
Pr= radial pitch
Pa= axial pitch
S= spiral thickness

In operation effectiveness depends from the features of screw 8 to comprise encreasing axial and radial pitches, starting from the strictly axial rod 100, to the free opposed end with centripetal trend. Upon rotation of the propeller 8, an approaching lead 037, 047, 057, to be worked, with its axis parallel to the axis of propeller 8, no matter wether it occurs in a radial or axial direction, as in any case it engages a circle or spiral arc 110, in centrifugal position, of relatively small radius, such as to provide a support or prop and contextually an arc 111, generally of a next turn, in centripetal position, wherein the surface 110, acting as a prop, urges the coating 03 of the lead 037, against the effective surface 111 which, in fact, works.

Operation of propeller 8 is very simple and selfunderstanding, even from heretofore explanations. However, a detailed description will be given in the following. Propeller 8 is a screw extending at least along a 270 degrees angle and preferably comprising two or more turns which are made of section which may be of any cross section and as the stem 100 is to be connected to a driving means, such as a mandrel, not shown it is advisable that the section 88, is of circular cross-section. In practice, when the wires 7 of a lead are only to be twisted, the lead itself is arranged as shown in the upper section of figure 8 wherein the untidly wires 777 are twisted and gathered, to provide a compacted strand 7777. Whereas, when a cable e.g. each of cables 037 and/or 047 and/or 057 is to be even stripped, it is necessary that, established that the function of centrifugal surfaces 110 of propeller remain the same, centripetal surfaces 111 are provided by a blade 91´ provided for stripping but adapted even for twisting. In the latter case, a cable is provided as shown in figure 9. From this figure it will be appreciated that in view of cables 037, 047, 057, of different diameter, an authomatic adjusting of reciprocal positions of propeller and grinding wheel is provided whereby the same propeller, can work any of them in the

best conditions. 0148154

Once stripped i.e., upon removal of a waste coating length 03, the cable 037 stands in the same conditions as the cable only to be twisted and, thus, in the same manner is twisted. In cases wherein both for reason of the angular range, of spiral 8, or of a relatively thin cable, to the cable 057 itself, standing in these conditions, a support is provided which is more affidable than rod 100 and distinctly by the adjacent beveled end of a proper sleeve 109.

As regards as the gathering device it is shown in figures 16 and 17 and is substantially comprised by two propellers, 6 and 6′, each driven by a proper motor 18, 18′ in opposite directions: e.g., propeller 6 is driven in a clockwise direction and propeller 6′ is driven in an anticlockwise direction. Propellers 6 and 6′, are in the form of brushes or combs, having radial blades or projections, 60 and 60′ respectively in the form of bristles or teeth, whose points or centifugal ends intersect, one another as, the sum of their radial extension is lengther than the distance between the propeller axes 6 and 6′.

The task of these propellers or brushes 6, 6′ is to engage the cable upon contact with a screened cable 0723, figure 16, or with a coaxial cable 0723, figura 17. It is passed through the same propellers, possibly stopping it, at B or B′,

between the same propellers, to confer them the proper condition, C or C'.

From figures 16 and 17 it will be appreciated that radial extensions 60, 60', in the form of bristles, blades or teeth, made of resilient, deformable material are substantially cilindrical but of different diameters. In detail, they have an encreasing trend, as regards as their bending moment, starting from the ends 61, 61' far from driving motors 18, 18' or from axial point 61, 61' of propellers 6, and 6'. This for the reason that the wires to be arranged, being in the form of a brush, even if very thin, function as a semibeam and thus, at their pointed ends, have a higher compliance and thus require thinner "bristles" 60, 60' or at any rate, with a higher bending moment. As it is known wires 7, are generally made of copper i.e. of a yielding unelastic material, they are, unidirectionally brushed or combed, as shown in the drawings. Obviously the bristle dimension and their intersecting length depends from the size of central leads 03, 03' covered by outer coating walls 0, 0'.

Operation of device, of figures 16 and 17, is very simple and selfunderstanding even from heretofore explanations. However a brief detailed description will be given in the following.

As a number of machines for stripping leads are available, a lead itself is submitted, to next working steps, in the conditions as shown at A, A'
in figures 16 and 17, respectively. The problem is
to direct the wires 7, 7', even if coiled spirally
7', or as an untidly brush 7, gently directing
them, as shown at B and B', with a compacted brush
777 standing at 90 degrees, with respect to the
longitudinal axis of the hollow of the propeller,
In fact, it is in this longitudinal parallel
position that from the top the cables 0723 and
0723' are engaged by propellers 6, 6'.

- 1 -

0148154

C L A I M S

1.   A    process    for    preparing,    at    least
semiautomatically,   a   stranded   lead of an electric
cable   (037,   047,   057),   particularly   of the kind
screened   (0723)   and/or coaxial (0723') viz. cables
provided   with   an outer coating (00) a crown (2) of
wires   (7)   which, in turn, envelope a sheath which
includes    a    lead    made    of    thin    wires   (7),
substantially   parallel, wherein the end of the lead
(0723,   0723'),   to   be   worked,   is   without   outer
coating   (00,   00')   and   the   screening   wires   (7),
adherring   to   the   inner   coating   (03, 03'), to be
gathered,    substantially    at    right    angles   with
respect    to    the    very   core   lead   (3,   3'),   and
thereafter   twisted,   while   the   end of the core lead
(3,   3')   is,   in   turn, to be stripped and twisted,
characterized   in   that   it   comprise   the   steps of:
supplying   the cable (0723, 0723') to be prepared or
alternately,   the   working   means   (fig.   2) along a
single   pathway   (P),   as   in   a   single step, three
steps   providing a way both for manual execution and
for authomatic execution which is thus possible.

2.   A   process, as claimed in claim 1, characterized
in   that   it   is   run   substantially on at least two
planes (I and III) at right angles.

3.   A   process, as claimed in claim 2, characterized
in   that   working   is   run along three planes (I, II
and   III) and that, upon a first cross movement (I')

0148154

of the cable axle (600), along a first plane (I) wherein operate the tools (61, 61') providing the parting, coplanar too but determining at least the direction (P) of a second plane (II), at right angles with the first one (I), whereby a movement at right angles follows, of the cable axis (600), along a plane (III), also at rigth angles with the first one (I) as well as itself (II), and determining a third plane (III), at right angles with the first two, wherein the third and the second plane are respectively arranged as the cable and the gathering of screening wires (7).

4. A process, as claimed in claims 2 and 3, characterized in that the planes at right angles, along which working take place, are two (I and II) and the third one (III) is surrogable by a rotation of the cable (0723) by a right angles about its axle.

5. A system of tools, for realization of process as claimed in claims from 1 through 4, characterized in that it comprises at least three devices (50, 53, 54), operating along at least two planes (I and II) at right angles therebetween, at least four working steps: two twisting steps, one gathering step and one stripping step.

6. A system of tools, as claimed in the preceding claim characterized in that the stripping device (53) comprises a spiral and/or a screw propeller (8), which in any section of its effective length

its structure is radially concentrated and comprising not more than $1/4 \times r \times r \times 3,14$, wherein r is the effective radius of the propeller (8).

7. A propeller, as claimed in claim 5, characterized in that it is provided with at least a converging end (100), at least a diverging end and at least a length thereof characterized by a pitch or radial inclination and by a pitch or axial inclination, such radial and axial pitches, extending for an angle at least exceding 270 degrees, such propeller being made in a single piece of section substantially constant in cross section shaped as a screw, wound on a conical surface, wherein upstream of the centripetal origin, there is a length (100) of axial section, providing a driving shaft, and at the opposite end, is provided with a length, of maximum centrifugal expansion wherein at least a fraction of the maximal centripetal section of its screw is shaped as a blade (91'), tool or the like.

8. A propeller, as claimed in claims 5 and 7, characterized in that the constructive parameters are correlated to the lead (037, 047, 057) to be prepared by the following demonstrative relation:

$1 < (V Pr + Pa) - S$ wherein:

$1 = d$

$1 = D - (\dfrac{D-d}{2})$ when the centripetal surface of the screw is a blade
and wherein again:

- 4 -

0148154

D= Outer diameter of the cable including the sheath
d= diameter of metal section
Pr= Radial pitch
Pa= Axial pitch
S= Spirale thickness

9. A process of making and particularly of sharpening a propeller (8), adapted to provide propellers, according to the claims 5, 7 and 8, characterized in that it comprises:

a) the provision of a screw according to a method known from the art of spiral making;

b) the provision with a tool particularly an abrading tool, particularly in the form of a grinding wheel (30) and that the tool (30) itself is approached to the screw (8) by keeping their axles substantially parallel and whereby engaging a circular cutting edge of said grinding wheel with the most centripetal edge of said screw (8), wherein the tangent point between the outer edge of said grinding wheel (8) and the surface to be provided (93', 94', 95') stands between the perpendicular to one of the lines joining the axles of said tool (30) and of the screw and its extension whereby to provide a blade (93, 94, 95) with an alfa edge angle which is a trigonometric function, i.e., an iperbolic x/y function, wherein x indicates the distance of the point of touch of said perpendicular and the radius of the spiral (8) in the same point.

10. System, as claimed in the preceding claims, characterized in that for the specification of the

0148154

outer wires (7), comprises at least two substantially tangential propellers (6, 6'), with beams (60, 60') in the form of interacting bristles, such propellers (6, 6') being driven for rotation in a converging direction, preferably from the top to the bottom, each of the propellers being in the form of a comb (61, 61') having a single range of deformable and/or resilient teeth or bristles (60, 60'), wherein said teeth or bristles of at least one of said propellers (6, 6') comprises said teeth or bristles of at least one of its ranges with a bending moment increasing or decreasing whereby those bristes having a lower bending moment stands in positions wherein they contact the unstripped end (03, 04, 05) of the cable itself (037, 047, 057).

FIG.3

FIG.2

FIG.1

FIG.4

1/8

0148154

0148154

FIG.5

**FIG 6**

**FIG.7**

FIG.8　　4/8　　0148154

777

8 →

100

7

88

7777

# FIG.9

047

037

057

04

03

05

109

8

111

110

91'

037

37

03

FIG.10

0148154

6/8

FIG.11

FIG12

FIG.13

FIG.15

FIG 14

**FIG.16**

**FIG.17**